# EUROPÄISCHE PATENTSCHRIFT

(11) **EP 2 666 727 B1**
(45) Veröffentlichungstag und Bekanntmachung des Hinweises auf die Patenterteilung: **07.09.2016**
(21) Anmeldenummer: 12004048.0
(22) Anmeldetag: 24.05.2012
(51) Int. Cl.: B65B 51/14, B65B 65/02, B29C 51/38, B26D 5/02, B29C 65/00

(54) **Hubeinrichtung für eine Verpackungsmaschine**
Lifting device for a packing machine
Dispositif de levage pour une machine d'emballage

(43) Veröffentlichungstag der Anmeldung: 27.11.2013
(73) Patentinhaber: MULTIVAC Sepp Haggenmüller SE & Co. KG, 87787 Wolfertschwenden (DE)
(72) Erfinder: Ehrmann, Elmar, 87730 Bad Grönenbach (DE)
(74) Vertreter: Grünecker Patent- und Rechtsanwälte PartG mbB

(56) Entgegenhaltungen:
- EP-A2- 1 832 408
- DE-A1- 10 327 092
- DE-A1-102007 026 727
- DE-A1-102008 034 971
- DE-A1-102010 054 976
- JP-A- 2000 288 792
- US-A1- 2007 135 285
- US-B1- 6 200 122

## Beschreibung

Die Erfindung bezieht sich auf eine Hubeinrichtung für eine Arbeitsstation einer Verpackungsmaschine mit den Merkmalen des Anspruchs 1.

Es ist aus DE 4216210 ein pneumatisch angetriebenes Hubwerk für eine Form- oder Siegelstation einer Tiefziehverpackungsmaschine bekannt. Des Weiteren ist aus DE 10 2006 006 218 A1 ein ebenfalls pneumatisches Hubwerk bekannt. Bei diesem Hubwerk wird die Bewegung des Zylinderkolbens mittels mehrerer Hebelmechanismen in eine vertikale Bewegung eines Werkzeugunterteils und Werkzeugoberteils unter anderem mit gegenläufig drehenden Achsen umgesetzt. Die Synchronisierung der gegenläufig drehenden Achsen ist aufwendig und durch die Hebelmechanismen ist das Hubwerk schwer zu reinigen.

Weitere Hubwerke für Verpackungsmaschinen gehen aus der DE 10 2009 008 452 A1 oder der DE 10 2010 013 889 A1 hervor. Ein Hubwerk gemäß dem Oberbegriff des Anspruchs 1 ist aus DE 10 2010 054 976 bekannt. Aufgabe der vorliegenden Erfindung ist es, ein verbessertes Hubwerk für eine Verpackungsmaschine zur Verfügung zu stellen.

Diese Aufgabe wird gelöst durch eine Hubeinrichtung mit den Merkmalen des Anspruchs 1. Vorteilhafte Weiterbildungen der Erfindung sind in den Unteransprüchen angegeben.

Die erfindungsgemäße Hubeinrichtung für eine Arbeitsstation einer Verpackungsmaschine umfasst einen Rahmen und zwei darin parallel zueinander angeordnete Antriebswellen, auf denen jeweils wenigstens zwei Kniehebelsysteme angeordnet sind, um gemeinsam ein Werkzeugunterteil vertikal zu bewegen. Die Antriebswellen weisen als Antrieb jeweils einen Servomotor auf, die Servomotoren sind zueinander synchronisiert und die Servomotoren sind an einer Seite des Rahmens an den Antriebswellen angebracht und treiben diese gegenläufig an. Dies erlaubt es, mit jeweils nur zwei Kniehebelsystemen mit jeweils zwei Hebeln ein Werkzeugunterteil vertikal zu bewegen. Diese Anordnung ist aufgrund der geringen Teileanzahl leicht reinigbar. Die Servomotoren weisen zusätzlich noch den Vorteil auf, dass beispielsweise bei einer Ausführung mit drei Kniehebelsystemen auf einer Antriebsachse bei einem größeren Werkzeugunterteil nur größere Servomotoren am Achsende vorgesehen werden müssen. Die Synchronisierung kann mechanisch über eine Kopplung beider Antriebswellen beispielsweise mittels einer Zahnriemenverbindung ausgeführt sein oder elektrisch über die Ansteuerung beider Servomotoren zeitgleich und mit gleichem Fahrprofil vorgesehen sein.

Die Drehrichtungen der Antriebswellen sind gegenläufig, um Kipp- und Querkräfte auf Führungen zu verringern bzw. ganz zu vermeiden. Im Fall einer mechanischen Kopplung der Antriebswellen mittels einer Zahnriemenverbindung ist der Gleichlauf eine vorteilhafte Variante.

In einer vorteilhaften Ausführungsform ist eine Referenzierungsposition vorgesehen, in der die zwei Servomotoren zyklisch aufeinander synchronisiert werden, um während des Betriebs der Hubeinrichtung eine synchronisierte Drehung der Antriebswellen und der Kniehebel zueinander sicherzustellen.

Vorzugsweise ist die Referenzierungsposition durch einen an dem Rahmen angebrachten ersten Anschlag in einer untersten Stellung des Werkzeugunterteils definiert. In einer vorteilhaften Ausführung ist die Referenzierungsposition mittels einer Motorstromüberwachung der Servomotoren ermittelbar, indem die Drehung der Antriebswellen auf den ersten Anschlag erfolgt, an dem die Antriebswellen blockiert werden.

Bevorzugt ist als Anschlag eine Kulisse vorgesehen. Dies ermöglicht, dass die Kulisse auch einen zweiten Anschlag für eine Totpunktposition der Kniehebel aufweisen kann.

In einer vorteilhaften Ausführung ist die Kulisse statisch gegenüber dem Rahmen ausgebildet, vorzugsweise verdrehsicher am Rahmen angebracht, welches eine mechanische einfache und zugleich stabile Ausführung darstellt.

Eine besondere Ausführung sieht eine Kopplung an ein Werkzeugoberteil vor, um eine optionale Oberhubbewegung des Werkzeugoberteils ohne einen zusätzlichen Aktor bereitstellen zu können.

Dabei sind die Bewegungsrichtungen des Werkzeugunterteils und des Werkzeugoberteils zweckmäßigerweise gegenläufig.

Vorzugsweise sind zwei diagonal angeordnete Führungen vorgesehen, da die gegenläufig und synchron drehenden Antriebswellen mit insgesamt vier Kniehebeln bereits eine lineare bzw. vertikale Bewegung der Werkzeuge ausführen und somit nur geringe Kräfte von den Führungen aufgenommen werden müssen.

Vorzugsweise sind Bremsen auf den Antriebswellen oder den Motoren vorgesehen, um die Werkzeuge in jeder beliebigen Stellung sicher halten zu können.

Bevorzugt sind ferner Messmittel zur Erfassung eines Drehwinkels im Motor oder an den Antriebswellen vorgesehen, um eine synchrone Drehung der Antriebswellen zu gewährleisten.

Im Folgenden wird ein vorteilhaftes Ausführungsbeispiel der Erfindung anhand einer Zeichnung näher erläutert. Im Einzelnen zeigen:
- Fig. 1: eine erfindungsgemäße Hubeinrichtung,
- Fig. 2: eine Seitenansicht der Hubeinrichtung mit einem Werkzeugunterteil und einem Werkzeugoberteil in offenen Stellung,
- Fig. 3: eine Seitenansicht der Hubeinrichtung wie in Fig. 2 in geschlossener Stellung.

Gleiche Komponenten sind in den Figuren durchgängig mit gleichen Bezugszeichen versehen.

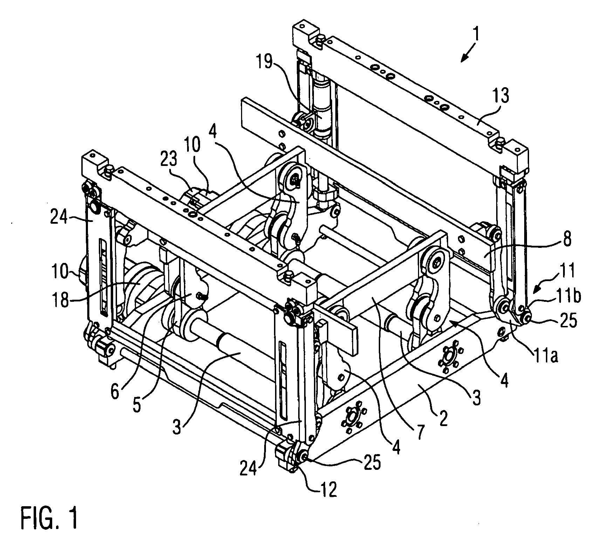

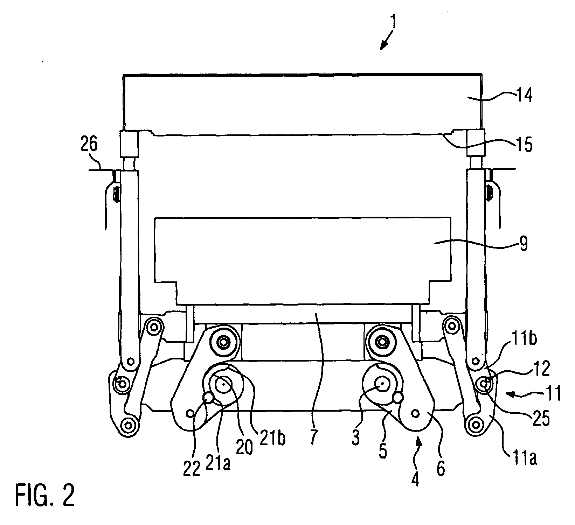

Fig. 1 zeigt eine Hubeinrichtung 1 mit einem Rahmen 2, über den die Hubeinrichtung 1 in einer Verpackungsmaschine in deren Maschinenrahmen montiert wird. In dem Rahmen 2 sind zwei Antriebswellen 3 parallel zueinander angeordnet und gelagert. An jeder Antriebswelle 3 sind jeweils zwei Kniehebel 4 innerhalb des Rahmens 2 vorgesehen, die einen Hebel 5 und ein Hebelpaar 6 umfassen. Die Kniehebel 4 sind mit Querstreben 7 verbunden, an denen wiederum eine erste Werkzeugaufnahme 8 für ein Werkzeugunterteil 9 (siehe Figur 2) angebracht ist. Die erste Werkzeugaufnahme 8 ist an zwei Führungen 19, die an diagonal gegenüber liegenden Ecken der Hubeinrichtung 1 angeordnet sind, vertikal geführt. An einer Seite des Rahmens 2 sind an den Antriebswellen 3 Servomotoren 10 angebracht, die die Antriebswellen 3 gegenläufig und synchron antreiben.

An der ersten Werkzeugaufnahme 8 sind mechanische Kopplungen 11 angebracht, die mit einer zweiten Werkzeugaufnahme 13 zur Aufnahme eines Werkzeugoberteils 14 (siehe Figur 2) verbunden sind, um einen Oberhub des Werkzeugoberteils 14 auszuführen. Eine Bewegung der ersten Werkzeugaufnahme 8 nach oben führt mittels der mechanischen Kopplungen 11 zu einer gegenläufigen Bewegung der zweiten Werkzeugaufnahme 13 nach unten. Dabei nähern sich das Werkzeugunterteil 9 und das Werkzeugoberteil 14 einander an, bis sie schließlich in Kontakt kommen und dabei eine Folienbahn 15 klemmen. Die Servomotoren 10 weisen Bremsen 18 auf, um die Hubeinrichtung 1 in dieser Arbeitsposition zu halten.

Die Hubeinrichtung 1 ist derart in einem Maschinenrahmen 26 (siehe Figur 2) über Halter 24 befestigt, dass bei einer Aufwärtsbewegung des Werkzeugunterteils 9 sich ein erster Hebel 11 a um einen Drehpunkt 12 im Rahmen 2 dreht. Der über einen zweiten Hebel 11 b mit dem Halter 24 gekoppelte Rahmen 2 wird dabei mit nach unten bewegt und damit auch das Werkzeugoberteil 14 bzw. die Werkzeugaufnahme 13 nach unten dem Werkzeugunterteil 9 entgegen. Beim Öffnen der Hubeinrichtung 1 ist dies entsprechend umgekehrt. Der zweite Hebel 11 b ist dabei in einer Drehachse 25 im ersten Hebel 11 a gelagert.

Die Hubeinrichtung 1, das Werkzeugunterteil 9 und das Werkzeugoberteil 14 bilden zusammen die Arbeitsstation der Verpackungsmaschine, beispielsweise eine Formstation, Siegelstation oder Schneidstation.

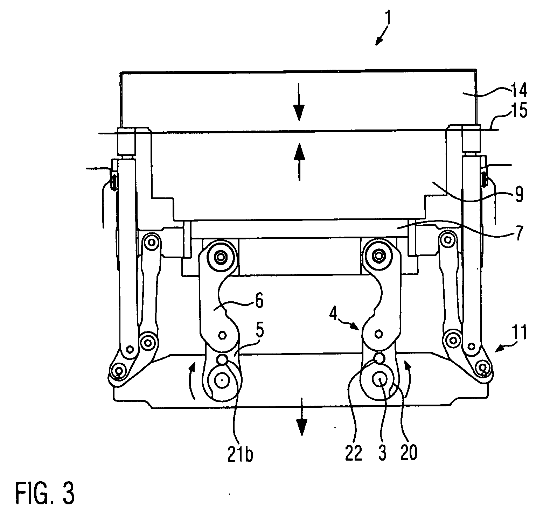

Fig. 2 zeigt die Hubeinrichtung 1 in einer offenen Stellung, in der die Antriebswellen 3 die Kniehebel 4 jeweils nach außen gedreht haben und das Werkzeugunterteil 9 sich in seiner untersten Stellung befindet. Für beide Antriebswellen 3 sind mechanische Anschläge 21a, 21 b vorgesehen, die eine Referenzierungsposition definieren, um die Servomotoren 10 zu Beginn und auch während des laufenden Betriebes der Hubeinrichtung 1 referenzieren zu können. An dem Rahmen 2 sind für jede Welle 3 Kulissen 20 angebracht, die einen ersten Anschlag 21a für die Referenzierungsposition und einen zweiten Anschlag 21 b für eine Arbeitsposition, in der sich die Kniehebel 4 in einer Totpunktstellung befinden, aufweisen. In der Totpunktstellung befinden sich die Kniehebel 4 in ihrer maximal ausgefahrenen Position bzw. sind der Hebel 5 und das Hebelpaar 6 vertikal ausgerichtet (siehe Fig. 3). Die Anschläge 21 a, 21 b begrenzen die Drehung der Hebel 5 mittels jeweils eines am Hebel 5 angebrachten Stiftes 22. Um beide Servomotoren 10 in der Referenzierungsposition zu referenzieren, drehen beide Servomotoren 10 in einem Prüffahrtmodus gegenläufig die Welle 3, bis die Stifte 22 jeweils an dem ersten Anschlag 21 a in Kontakt kommen und die Drehung blockieren. In dieser Position erfolgt eine Referenzierung beider Servomotoren 10, um eine anschließende synchronisierte Bewegung beider Wellen 3 zu ermöglichen, so dass das Werkzeugunterteil 9 vertikal ohne Verkanten angehoben werden kann. Der Vorgang dieser Referenzierung kann zyklisch erfolgen, vorzugsweise bei jedem neuen Einschalten der Verpackungsmaschine.

Fig. 3 zeigt die Hubeinrichtung 1 in einer geschlossenen Stellung, die auch ihre Arbeitsposition darstellt. In dieser Position ist die Folie 15 zwischen dem Werkzeugoberteil 14 und dem Werkzeugunterteil 9 eingeklemmt, beispielsweise um Mulden in die Folie 15 zu formen. Um die Werkzeuge 9, 14 in diese Position zu bewegen, drehen die Servomotoren 10 die Antriebswellen 3 gegenläufig, d.h. dass sich die rechte Antriebswelle 3 gegen den Uhrzeigersinn und die linke Antriebswelle 3 im Uhrzeigersinn dreht. Dabei heben die Kniehebel 4 die Querstreben 7 linear nach oben, bis die Kniehebel 4 den Totpunkt erreichen. Die Kulisse 20 ist derart gestaltet, dass in dieser Position der Stift 22 mit dem Anschlag 21 b in Kontakt kommt und eine weitere Drehung blockiert. Die Erfassung dieser Position und damit des maximalen Hubes bzw. der maximal möglichen Drehung der Wellen 3 zwischen den Anschlägen 21a, 21b wird mittels einer Meßfahrt durchgeführt. Mit reduzierter Kraft drehen die Servomotore 10 die Wellen 3 und damit die Hebel 5 und die Stifte 22 solange, bis die Endposition erreicht wird, in der die Drehung der Wellen 3 an den Anschlägen 21 b blockiert wird. Anschließend ist der gesamte Hubweg bzw. der Drehbereich bekannt, da die Servomotoren 10 integrierte Messmittel 20, vorzugsweise inkrementale oder absolute Drehgeber, zur Erfassung eines Drehwinkels aufweisen. Über eine Maschinensteuerung der Verpackungsmaschine kann das Werkzeugunterteil 9 in jede beliebige Position zwischen den Anschlägen 21 a, 21 b bzw. zwischen der Referenzierungsposition und der geschlossenen Stellung positioniert werden.

Es sind auch alternative Ausführungen denkbar, bei denen anstatt der Kulisse 20 jeweils mechanisch einstellbare getrennte Anschläge 21a, 21b vorgesehen sind. Messmittel 23 wie Drehgeber können in einer alternativeren Ausführung auch nicht im Motor 10 integriert, sondern an den Wellen 3 angebracht sein. Desweiteren kann die Hubeinrichtung 1 auch drei, vier oder mehr Führungen 19 aufweisen. Die Servomotoren 10 können Getriebe aufweisen, um eine genaue Drehbewegung ausführen zu können und um ein hohes Drehmoment bereitstellen zu können. In einer weiteren Abwandlung könnte auf einen Oberhub, d. h. auf eine Hubbewegung des Werkzeugoberteils 14, verzichtet werden. In diesem Fall würde die Kopplung 11 entfallen.

## Patentansprüche

1. Hubeinrichtung (1) für eine Arbeitsstation einer Verpackungsmaschine, umfassend einen Rahmen (2) und zwei darin parallel zueinander angeordnete Antriebswellen (3), auf denen jeweils wenigstens zwei Kniehebel (4) angeordnet sind, um gemeinsam ein Werkzeugunterteil (9) vertikal zu bewegen, **dadurch gekennzeichnet, dass** die Antriebswellen (3) als Antrieb jeweils einen Servomotor (10) aufweisen, die Servomotoren (10) zueinander synchronisiert sind und die Servomotoren (10) an einer Seite des Rahmens (2) an den Antriebswellen (3) angebracht sind und diese gegenläufig antreiben.

2. Hubeinrichtung nach einem der vorangehenden Ansprüche, **dadurch gekennzeichnet, dass** eine Referenzierungsposition vorgesehen ist.

3. Hubeinrichtung nach Anspruch 2, **dadurch gekennzeichnet, dass** die Referenzierungsposition durch einen an dem Rahmen (2) angebrachten ersten Anschlag (21 a) in einer untersten Stellung des Werkzeugunterteils (9) definiert ist.

4. Hubeinrichtung nach Anspruch 3, **dadurch gekennzeichnet, dass** das Erreichen der Referenzierungsposition mittels einer Motorstromüberwachung der Servomotoren (10) ermittelbar ist.

5. Hubeinrichtung nach einem der vorangehenden Ansprüche 3 oder 4, **dadurch gekennzeichnet, dass** als Anschlag (21a) eine Kulisse (20) vorgesehen ist.

6. Hubeinrichtung nach Anspruch 5, **dadurch gekennzeichnet, dass** die Kulisse (20) auch einen zweiten Anschlag (21b) für eine Totpunktposition der Kniehebel (4) aufweist.

7. Hubeinrichtung nach Anspruch 5 oder 6, **dadurch gekennzeichnet, dass** die Kulisse (20) statisch gegenüber dem Rahmen (2) vorgesehen, vorzugsweise verdrehsicher am Rahmen (2) angebracht ist.

8. Hubeinrichtung nach einem der vorangehenden Ansprüche, **dadurch gekennzeichnet, dass** die Hubeinrichtung (1) eine Kopplung (11) aufweist, die dazu konfiguriert ist, gegenläufige Bewegungen des Werkzeugunterteils (9) und des Werkzeugoberteils (14) zu bewirken.

9. Hubeinrichtung nach einem der vorangehenden Ansprüche, **dadurch gekennzeichnet, dass** wenigstens zwei Führungen (19) an einander diagonal gegenüberliegenden Ecken der Hubeinrichtung (1) vorgesehen sind.

10. Hubeinrichtung nach einem der vorangehenden Ansprüche, **dadurch gekennzeichnet, dass** Bremsen (18) auf den Antriebswellen (3) oder an den Motoren (10) vorgesehen sind.

11. Hubeinrichtung nach einem der vorangehenden Ansprüche, **dadurch gekennzeichnet, dass** Messmittel (23) zur Erfassung eines Drehwinkels im Servomotor (10) oder an den Antriebswellen (3) vorgesehen sind.

## Claims

1. A lifting device (1) for a work station of a packaging machine, comprising a frame (2) and two drive shafts (3), which are arranged in parallel in the frame (2), and which each have arranged thereon at least two toggle levers (4) for vertically moving in common a tool lower part (9), **characterized in that** the drive shafts (3) each have a servomotor (10) as a drive unit, that the servomotors (10) are synchronized with each other, and the servomotors (10) are attached to the drive shafts (3) on a side of the frame (2), the servomotors driving the drive shafts (3) to rotate in opposite directions of rotation.

2. A lifting device according to one of the preceding claims, **characterized in that** a referencing position is provided.

3. A lifting device according to claim 3, **characterized in that** the referencing position is defined by a first stop (21 a) at a lowermost position of the tool lower part (9), and the first stop (21 a) is attached to the frame (2).

4. A lifting device according to claim 3, **characterized in that** the arrival at the referencing position can be detected by means of motor current monitoring of the servomotors (10).

5. A lifting device according to one of the preceding claims 3 or 4, **characterized in that** the stop (21 a) provided is a cam profile (20).

6. A lifting device according to claim 5, **characterized in that** the cam profile (20) includes also a second stop (21 b) for a dead center position of the toggle levers (4).

7. A lifting device according to claim 5 or 6, **characterized in that** the cam profile (20) is provided statically relative to the frame (2), preferably non-rotationally attached to the frame (2).

8. A lifting device according to one of the preceding claims, **characterized in that** the lifting device (1) includes a coupling (11) configured for causing oppositely directed movements of the tool lower part (9) and of the tool upper part (14).

9. A lifting device according to one of the preceding claims, **characterized in that** at least two guide units (19) are provided at diagonally opposed corners of the lifting device (1).

10. A lifting device according to one of the preceding claims, **characterized in that** brakes (18) are provided on the drive shafts (3) or at the motors (10).

11. A lifting device according to one of the preceding claims, **characterized in that** measuring devices (23) are provided for detecting an angle of rotation in the servomotor (10) or at the drive shafts (3).

## Revendications

1. Dispositif de soulèvement ou de levage (1) destiné à un poste de travail d'une machine d'emballage, comprenant un cadre (2) dans lequel sont agencés de manière parallèle l'un à l'autre, deux arbres d'entraînement (3) sur chacun desquels sont respectivement agencés au moins deux systèmes à genouillère (4) pour déplacer verticalement, en commun, une partie inférieure d'outillage (9), **caractérisé en ce que** les arbres d'entraînement (3) comportent chacun, en guise d'entraînement, un servomoteur (10), les servomoteurs (10) sont synchronisés les uns avec les autres, et les servomoteurs (10) sont montés, d'un côté du cadre (2), sur les arbres d'entraînement (3), et entraînent ceux-ci selon des sens opposés.

2. Dispositif de soulèvement selon l'une des revendications précédentes, **caractérisé en ce qu'**il est prévu une position de prise de référence.

3. Dispositif de soulèvement selon la revendication 2, **caractérisé en ce que** la position de prise de référence est définie par une première butée (21a) placée sur le cadre (2), dans une position la plus basse de la partie inférieure d'outillage (9).

4. Dispositif de soulèvement selon la revendication 3, **caractérisé en ce que** l'arrivée dans la position de prise de référence peut être déterminée au moyen d'une surveillance du courant moteur des servomoteurs (10).

5. Dispositif de soulèvement selon l'une des revendications précédentes 3 ou 4, **caractérisé en ce qu'**en guise de butée (21a), il est prévu une coulisse (20).

6. Dispositif de soulèvement selon la revendication 5, **caractérisé en ce que** la coulisse (20) présente également une deuxième butée (21b) pour une position de point mort des systèmes à genouillère (4).

7. Dispositif de soulèvement selon la revendication 5 ou la revendication 6, **caractérisé en ce que** la coulisse (20) est prévue de manière statique par rapport au cadre (2), de préférence est rapportée de manière fixe en rotation sur le cadre (2).

8. Dispositif de soulèvement selon l'une des revendications précédentes, **caractérisé en ce que** le dispositif de soulèvement (1) comporte un couplage (11), qui est configuré pour produire des mouvements de sens opposés de la partie inférieure d'outillage (9) et de la partie supérieure d'outillage (14).

9. Dispositif de soulèvement selon l'une des revendications précédentes, **caractérisé en ce qu'**au moins deux guidages (19) sont prévus au niveau de coins diagonalement opposés du dispositif de soulèvement (1).

10. Dispositif de soulèvement selon l'une des revendications précédentes, **caractérisé en ce que** des freins (18) sont prévus sur les arbres d'entrainement (3) ou dans les moteurs (10).

11. Dispositif de soulèvement selon l'une des revendications précédentes, **caractérisé en ce que** des moyens de mesure (23) destinés à relever un angle de rotation, sont prévus dans le servomoteur (10) ou sur les arbres d'entraînement (3).
